Europäisches Patentamt

European Patent Office

Office européen des brevets

(19)

(11) **EP 0 934 567 B1**

(12) **EUROPÄISCHE PATENTSCHRIFT**

(45) Veröffentlichungstag und Bekanntmachung des Hinweises auf die Patenterteilung:
**18.04.2001 Patentblatt 2001/16**

(51) Int Cl.[7]: **G06F 17/18**

(21) Anmeldenummer: **97944711.7**

(22) Anmeldetag: **15.09.1997**

(86) Internationale Anmeldenummer:
**PCT/DE97/02068**

(87) Internationale Veröffentlichungsnummer:
**WO 98/19252 (07.05.1998 Gazette 1998/18)**

(54) **VERFAHREN ZUR KLASSIFIKATION DER STATISTISCHEN ABHÄNGIGKEIT EINER MESSBAREN ZEITREIHE**

METHOD OF CLASSIFYING STATISTICAL DEPENDENCY OF A MEASURABLE SERIES OF STATISTICAL VALUES

PROCEDE DE CLASSIFICATION DE LA DEPENDANCE STATISTIQUE D'UNE SERIE CHRONOLOGIQUE MESURABLE

(84) Benannte Vertragsstaaten:
**DE GB NL**

(30) Priorität: **30.10.1996 DE 19643918**

(43) Veröffentlichungstag der Anmeldung:
**11.08.1999 Patentblatt 1999/32**

(73) Patentinhaber: **SIEMENS AKTIENGESELLSCHAFT
80333 München (DE)**

(72) Erfinder:
• **DECO, Gustavo
D-80636 München (DE)**
• **SCHITTENKOPF, Christian
D-81539 München (DE)**

(56) Entgegenhaltungen:
• **DECO G ET AL: "NONPARAMETRIC DATA SELECTION FOR IMPROVEMENT OF PARAMETRIC NEURAL LEARNING: A CUMULANT-SURROGATE METHOD" ICANN 96, 16.Juli 1996, Seiten 121-126, XP000676842**
• **DECO G ET AL: "LEARNING TIME SERIES EVOLUTION BY UNSUPERVISED EXTRACTION OF CORRELATIONS" PHYSICAL REVIEW E. STATISTICAL PHYSICS, PLASMAS, FLUIDS, AND RELATD INTERDISCIPLINARY TOPICS, Bd. 51, Nr. 3, März 1995, Seiten 1780-1790, XP000677868**
• **DECO G ET AL: "UNSUPERVISED LEARNING FOR BOLTZMANN MACHINES" NETWORK: COMPUTATION IN NEURAL SYSTEMS, Bd. 6, Nr. 3, 1.August 1995, Seiten 437-448, XP000527121**

## Beschreibung

Die Erfindung betrifft ein Verfahren zur Klassifikation der statistischen Abhängigkeit einer meßbaren ersten Zeitreihe, die eine vorgebbare Anzahl von Abtastwerten, insbesondere eines elektrischen Signals, aufweist, durch einen Rechner.

Aus [3] ist ein nichtparametrischer kumulantenbasierter statistischer Ansatz zur Detektion linear und nichtlinear statistischer Abhänigkeiten in nicht-stationären Zeitfolgen beschrieben.

In [4] werden Zeitfolgen modelliert, indem statistische Korrelationen zwischen vergangenen und aktuellen Elementen der Zeitfolge berücksichtigt werden. Dabei sind die Korrelationen im allgemeinen nichtlinear.

Die Analyse dynamischer Systeme im Hinblick auf eine Klassifikation der statistischen Abhängigkeit zur Vorhersage des Verlaufs eines beliebigen Meßsignals ist eine Motivation für vielseitige Anwendungen.

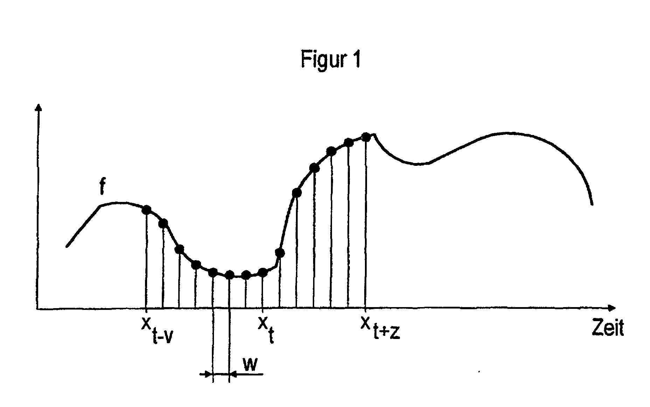

Ein gegebenes Meßsignal x kann abgetastet werden mit der Schrittweite w (siehe Figur 1). Dieses willkürlich erscheinende Signal enthält lineare und nichtlineare statistische Abhängigkeiten, die abhängig von einer bestimmten Anzahl von Werten v in der Vergangenheit analysiert werden und die gewonnene Information dazu benutzt wird, eine Anzahl von Werten z in der Zukunft vorherzusagen.

Der Erfindung liegt die Aufgabe zugrunde, ein Verfahren zu schaffen, um den Informationsfluß eines beliebigen Meßsignals zu klassifizieren gemäß seiner statistischen Abhängigkeit durch einen Rechner unter Berücksichtigung von realen Störfaktoren, wie beispielsweise Rauschen.

Das Problem wird durch das Verfahren gemäß Patentanspruch 1 gelöst.

In der Erfindung wird ein geeignetes Verfahren zur Klassifikation des Informationsflusses eines dynamischen Systems vorgestellt. Die Wahrscheinlichkeitsdichte eines Meßsignals wird hierzu durch ein neuronales Netz modelliert. Mit diesem trainierten neuronalen Netz lassen sich Vorhersagen bezüglich des Verlaufs eines aus v vergangenen Werten bestehenden Signals für z zukünftige Werte machen. Inwieweit diese Vorhersagen innerhalb eines festzulegenden Bereichs zutreffend sind, kann durch Erhöhung der Ordnung, i.e. der Anzahl der Schritte v in die Vergangenheit verbessert werden. Die Genauigkeit der Vorhersage bewegt sich innerhalb einer um einen Mittelwert liegenden Varianz (Verteilung nach Gauß oder Summe von Gaußverteilungen).

Die Vorhersagewahrscheinlichkeit wird durch Wahrscheinlichkeitsdichten eines dynamischen Systems modelliert. Das dynamische System kann gegeben sein durch ein beliebiges Meßsignal. Ein nichtlinearer Markov-Prozeß der Ordnung m erweist sich als geeignet, bedingte Wahrscheinlichkeitsdichten zu beschreiben. Somit wird der nichtlineare Markov-Prozeß durch ein neuronales Netz modelliert, damit abhängig von der Ordnung m des nichtlinearen Markov-Prozesses mit Hilfe des neuronalen Netzes für r Schritte in die Zukunft eine Vorhersage getroffen werden kann. Die Ordnung m des nichtlinearen Markov-Prozesses entspricht dabei der Anzahl der Werte aus der Vergangenheit, die bei den bedingten Wahrscheinlichkeitsdichten berücksichtigt werden. Der vorhergesagte Wert für je einen Schritt r liegt im durch eine Varianz gegebenen Bereich um einen statistischen Mittelwert.

Das neuronale Netz kann trainiert werden, indem nach dem Maximum-Likelihood-Prinzip das Produkt der Wahrscheinlichkeiten maximiert wird. Als Eingabe für das Training des neuronalen Netzes werden m+1 Werte des dynamischen Systems, das modelliert werden soll, benötigt, wobei m die Ordnung des nichtlinearen Markov-Prozesses darstellt. Trainiert werden die dem nichtlinearen Markov-Prozeß entsprechenden Vorhersagewahrscheinlichkeiten.

Mit dem trainierten neuronalen Netz läßt sich eine beliebige Anzahl Surrogate [2], die eine zweite Zeitreihe darstellen, ermitteln. Zur Klassifikation der zweiten Zeitreihe wird ein Maß d(r) für statistische Abhängigkeit berechnet, wobei r die Anzahl der Schritte in die Zukunft bestimmt. Die Berechnung von d(r) erfolgt sowohl für die erste Zeitreihe als auch für die zweite Zeitreihe. Der Unterschied zwischen dem der ersten Zeitreihe entsprechenden Maß d(r) und dem der zweiten Zeitreihe entsprechenden Maß d(r) erklärt, inwieweit die vom neuronalen Netz produzierte zweite Zeitreihe mit der ersten Zeitreihe übereinstimmt. Dabei werden mehrere r zukünftige Schritte betrachtet, um eine genauere Aussage über die Qualität der Vorhersage oder die Güte der Übereinstimmung machen zu können.

Eine vorteilhafte Ausprägung des erfindungsgemäßen Verfahrens liegt in der Verwendung einer nach Gauss modifizierten Zeitreihe anstelle der ersten Zeitreihe, die das dynamische System beschreibt. Die Gauss'sche Zeitreihe erhält man, indem entsprechend der Anzahl N Werte der ersten Zeitreihe Zufallszahlen nach Gauss, d.h. um einen Mittelwert mit einer festzulegenden Varianz, ermittelt werden. Diese N Zufallszahlen werden gemäß dem Rang der ersten Zeitreihe sortiert. Somit erhält man die modifizierte nach Gauss verteilte Zeitreihe. Die Verwendung der modifizierten Zeitreihe nach Gauss hat gegenüber der Verwendung der ersten Zeitreihe den Vorteil, daß die Abtastwerte der modifizierten Zeitreihe nach Gauss normiert sind und Nichtlinearitäten, die durch die Meßapparatur bei der Aufnahme der Abtastwerte verursacht worden sein könnten, durch die Wahrscheinlichkeitsdichteverteilung nach Gauss entsprechend innerhalb des normierten Bereichs abgeschwächt werden.

Sollte die erste Zeitreihe nicht ausreichend genau klassifiziert worden sein, so kann es vorteilhaft sein, eine Iteration mit einem nichtlinearen Markov-Prozeß höherer Ordnung durchzuführen, um eine genauere Vorhersagbarkeit der zweiten Zeitreihe zu erhalten. Somit werden iterativ Tests mit verschiedenen Hypothesen möglich.

Weiterbildungen des erfindungsgemäßen Verfahrens ergeben sich aus den abhängigen Ansprüchen.

Die Erfindung wird anhand eines Ausführungsbeispiels, das in den Figuren dargestellt ist, weiter erläutert.

Es zeigen

Fig. 1     eine Skizze, die den Verlauf eines Meßsignals f, das durch Abtastung mit einer Schrittweite w in eine Zeitreihe $\{x\}$ übergeführt wird, zeigt,

Fig. 2     ein Ablaufdiagramm, in dem die einzelnen Verfahrensschritte dargestellt sind,

Fig. 3     eine Skizze, in der ein Rechner, mit dem das Verfahren durchgeführt wird, dargestellt ist.

Fig. 1 dient der Einführung in den Themenbereich der Erfindung. Hier werden die Grundbegriffe der Abtastung eines Meßsignalverlaufs und entsprechende Bezeichnungen aufgeführt. Ein Meßsignal f eines beliebigen dynamischen Systems hat einen gezeigten beispielhaften Verlauf. Um das Signal mit einem Rechner erfassen zu können, muß es abgetastet und analog/digital gewandelt werden. Ein beliebige Schrittweite w legt das Abtastintervall fest. Der abgetastete analoge Wert muß in einen digitalen Wert umgewandelt werden. Die Zeitreihe in einem Rechner besteht also aus mehreren analog/digital gewandelten Abtastwerten.

Für die Ermittlung von zukünftigen Werten gemäß einer Vorhersagewahrscheinlichkeit, wie dies durch das erfindungsgemäße Verfahren vorgeführt werden soll, ist die Betrachtung eines Punktes $x_t$ wesentlich, von dem aus eine bestimmte Anzahl von v Schritten in der Vergangenheit der Punkt $x_{t-v}$ und eine bestimmte Anzahl von z Schritten in der Zukunft der Punkt $x_{t+z}$ liegt.

Vorhersage bedeutet, daß ausgehend von dem Punkt $x_t$ für einen z Schritte in der Zukunft liegenden Punkt $x_{t+z}$, aus der Information aller bis zu einem Punkt $x_{t-v}$ in der Vergangenheit zurückliegenden Punkte des dynamischen Systems ein Wert vorausgesagt werden soll.

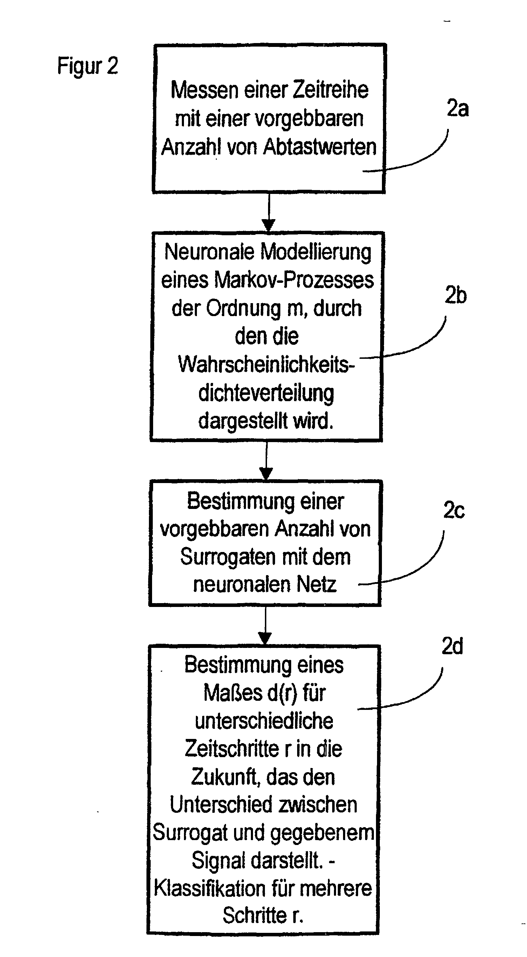

In Fig. 2 sind die einzelnen Verfahrensschritte des erfindungsgemäßen Verfahrens dargestellt.

In einem ersten Schritt 2a wird das Signal gemessen. Ist das dynamische System analoger Art, muß es abgetastet werden und durch Analog-/Digitalwandlung einem Rechner R als erste Zeitreihe $\{x_t\}$ zugänglich gemacht werden. Liegt die Zeitreihe schon in digitalen Signalen vor, können diese direkt als erste Zeitreihe $\{x_t\}$ vom Rechner R verarbeitet werden.

Im nächsten Schritt 2b wird der nichtlineare Markov-Prozeß der Ordnung m neuronal modelliert. Die Ordnung m des nichtlinearen Markov-Prozesses sollte so festgesetzt werden, daß sie den Informationsfluß der ersten Zeitreihe approximiert. Sollte kein detailliertes Wissen über das vorhandene dynamische System zur Verfügung stehen, wird m=1 festgesetzt. Ein Ausnahme ist es, wenn das dynamische System durch unkorreliertes Rauschen bestimmt ist, was m=0 entspricht und in [2] behandelt wird. Um den nichtlinearen Markov-Prozeß der Ordnung m zu realisieren, wird ein neuronales Netz trainiert, indem das Maximum-Likelihood-Prinzip angewandt wird, das die Lernvorschrift verfolgt, das Produkt der Wahrscheinlichkeiten zu maximieren. Das neuronale Netz soll somit eine Einschätzung der bedingten Wahrscheinlichkeit

$$p\left(x_t \mid x_{t-1}, \ldots, x_{t-m}\right) \qquad \text{mit } t=1,2,\ldots,N \qquad\qquad (1)$$

durchführen.

Mit dem trainierten neuronalen Netz kann eine vorgebbare Anzahl von zweiten Zeitreihen $\{z_t\}$ (t=1,2,..,N) ermittelt werden. Jede dieser zweiten Zeitreihen entspricht einem Surrogat $S_i$ (siehe Fig.2, Schritt 2c). Die m Werte aus der Vergangenheit $x_1, \ldots, x_m$ werden in das neuronale Netz eingegeben. Das neuronale Netz gibt einen neuen Wert $z_1$, den ersten Wert der zweiten Zeitreihe $\{z_t\}$, aus. Eine neue Eingabe $x_2, \ldots, x_m, z_1$ führt zu einem zweiten Wert $z_2$ der zweiten Zeitreihe. Durch Iteration erhält man die erwähnte zweite Zeitreihe $\{z_t\}$.

Für eine verschiedene Anzahl zukünftiger Schritte r (siehe Fig.2, Schritt 2d) wird je ein Unterschied zwischen der ersten Zeitreihe und der zweiten Zeitreihe, die aus dem Surrogat folgt, errechnet, indem jeweils ein Maß d(r) für die jeweilige Zeitreihe bestimmt wird. Die Herleitung des Maßes d(r) wird im folgenden näher dargelegt.

Gegeben sei die erste Zeitreihe $\{x_t\}$.

Ein Maß für die Vorhersagbarkeit eines zukünftigen Wertes (r Schritte in die Zukunft) abhängig von n-verwendeten Werten aus der Vergangenheit ist gegeben durch

$$p\left(x_1, \ldots, x_n, x_{n+r}\right) - p\left(x_1, \ldots, x_n\right) \cdot p\left(x_{n+r}\right) \qquad\qquad (2)$$

wobei p(.) die Wahrscheinlichkeitsdichtefunktion bezeichnet. Die Differenz ist 0, wenn $(x_1, \ldots, x_n)$ und $x_{n+r}$ statistisch unabhängig sind, anderenfalls ist die Differenz ungleich 0. Für den Fall, daß alle Arten von Korrelationen innerhalb höchstens r Schritte bis auf 0 abnehmen, erhält man

$$p(x_1, \ldots, x_n, x_{n+r}) = p(x_1, \ldots, x_n) \cdot p(x_{n+r}) \tag{3}.$$

(3) läßt sich auch umschreiben in

$$\ln \Phi_1 = \ln \Phi_2 + \ln \Phi_3 \tag{4}$$

$$\Phi_1 = \Phi_1(K_1, \ldots, K_n, K_{n+r}) = \int \exp\left(i \cdot \sum_{j=1}^{n, \, n+r} x_j K_j\right) \cdot \tag{5}$$
$$\cdot \, p(x_1, \ldots, x_n, x_{n+r}) dx_1 \ldots dx_n dx_{n+r}$$

$$\Phi_2 = \Phi_2(K_1, \ldots, K_n) = \int \exp\left(i \cdot \sum_{j=1}^{n} x_j K_j\right) \cdot \tag{6}$$
$$\cdot \, p(x_1, \ldots, x_n) dx_1 \ldots dx_n$$

$$\Phi_3 = \Phi_3(K_{n+r}) = \int \exp(i \cdot x_{n+r} \cdot K_{n+r}) \cdot \tag{7},$$
$$\cdot \, p(x_{n+r}) dx_{n+r}$$

wobei $\Phi(.)$ die Fourier-Transformierte und $K_i$ die Variablen der Funktion $\Phi(K_i)$ im Fourier-Raum bezeichnet.

Dabei gilt $i = \sqrt{-1}$, und $\Sigma_{j=1}^{n,n+r}$ drückt aus, daß sich die Summe erstreckt über alle Elemente von $\{1,\ldots,n,n+r\}$.

Wenn man die charakteristischen Funktionen in Kumulanten [1] expandiert, folgt daraus

$$\Phi_1 = \exp\left(\sum_{j=1}^{\infty} \frac{i^j}{j!} \cdot \sum_{i_1,\ldots,i_j=1}^{n,n+r} \aleph_{i_1\ldots i_j} K_{i_1}\ldots K_{i_j}\right) \tag{8}$$

$$\Phi_2 = \exp\left(\sum_{j=1}^{\infty} \frac{i^j}{j!} \cdot \sum_{i_1,\ldots,i_j=1}^{n} \aleph_{i_1\ldots i_j} K_{i_1}\ldots K_{i_j}\right) \tag{9}$$

$$\Phi_3 = \exp\left( \sum_{j=1}^{\infty} \frac{i^j}{j!} \cdot \sum_{i_1,\ldots,i_j=1}^{n+r} \aleph_{i_1\ldots i_j} K_{i_1}\cdots K_{i_j} \right) \qquad (10),$$

wobei $\aleph$ (.) die Kumulanten bezeichnen (siehe [1]).

Einsetzen dieser Erweiterung in Gleichung (4) ergibt die Bedingung

$$\sum_{j=1}^{\infty} \frac{i^j}{j!} \cdot \sum_{\substack{i_1\ldots i_j \\ B}}^{n,n+r} \aleph_{i_1\ldots i_j} K_{i_1}\cdots K_{i_j} = 0 \qquad (11)$$

mit der Einschränkung

$$B \equiv \left( \exists i_s : i_s = n + r \;\wedge\; \neg \forall i_s : i_s = n + r \right) \qquad (12).$$

Im Falle statistischer Unabhängigkeit kann Gleichung (11) vereinfacht werden zu

$$\aleph_{i_1\ldots i_j} = 0 \qquad \forall i_1,\ldots,i_j \in \{1,\ldots,n,n+r\} \wedge B \qquad (13).$$

Dadurch ergibt sich ein Maß für die statistische Abhängigkeit zwischen n-Anzahl verwendeter Werte aus der Vergangenheit und einem Zeitpunkt r-Schritte in der Zukunft durch

$$d(r) = \sum_{j=1}^{\infty} \sum_{\substack{i_1,\ldots,i_j=1 \\ B}}^{n,n+r} \aleph_{i_1\ldots i_j}^2 \qquad (14).$$

Indem man d(r) für r=1,2,... berechnet, erhält man eine kumulantenbasierte Charakteristik des Informationsflusses des zugrundeliegenden dynamischen Systems.

Zur praktischen Anwendung sollte Gleichung (14) approximiert werden durch eine begrenzte Anzahl von Termen. Weiterhin muß n endlich sein. Man nähert d(r), indem man Kumulanten bis zur vierten Ordnung berechnet. Kumulanten erster und zweiter Ordnung berücksichtigen lineare Abhängigkeiten, Kumulanten der dritten und vierten Ordnung berücksichtigen nichtlineare Abhängigkeiten.

Der Vergleich der ersten Zeitreihe mit einem Surrogat, das die zweite Zeitreihe repräsentiert, ermöglicht eine Klassifikation abhängig vom Maß d(r), das für jede Zeitreihe und für jeden Zeitschritt r in die Zukunft einzeln bestimmt wird.

Der Klassifikation liegt ein Test zugrunde, der sequentiell für mehrere 0-Hypothesen, d.h. für steigende Ordnung des nichtlinearen Markov-Prozesses, durchgeführt werden kann. Diese Iteration bewirkt, daß durch Erhöhung der Ordnung des nichtlinearen Markov-Prozesses das dynamische System besser beschrieben werden kann.

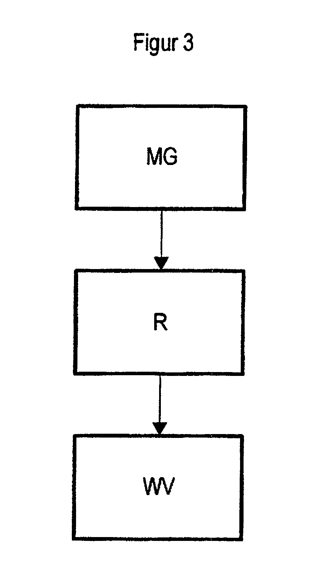

In Fig. 3 ist der Rechner R dargestellt, mit dem das erfindungsgemäße Verfahren durchgeführt wird. Der Rechner R verarbeitet die vom Meßgerät MG aufgenommenen Zeitreihen. Das möglicherweise analoge Signal kann sowohl im Meßgerät MG als auch im Rechner R analog/digital gewandelt werden. Beide Möglichkeiten sind für das erfindungsgemäße Verfahren möglich. Das Klassifikationsergebnis, das durch den Rechner R auf die im vorigen beschriebene Weise ermittelt wird, kann nach Bedarf weiterverarbeitet (WV) werden.

Im Rahmen dieses Dokuments wurden folgende Veröffentlichungen zitiert:

[1] C.Gardiner, Handbook of Stochastic Methods, 2.Auflage, Springer Verlag, ISBN 0-387-11357-6, S.33-36, New York, 1985.

[2] J.Theiler, S.Eubank, A.Longtin, B.Galdrikian and J.D.Farmer, Physica D 58, S.77, 1982.

[3] G.Deco et al., Nonparametric Data Selection for Improvement of Parametic Neural Learning: A Cumulant-Surrogate Method, ICANN 96, 16.07.1996, Seiten 121-126.

[4] G.Deco et al., Learning Time Series Evolution by Unsupervised Extraction of Correlations, Physical Review E. Statistical Physics, Plasmas, Fluids and Related Interdisciplinary Topics, Bd.51, Nr.3, März 1995, Seiten 1780-1790.

## Patentansprüche

1.  Verfahren zur Klassifikation der statistischen Abhängigkeit einer meßbaren ersten Zeitreihe, die eine vorgebbare Anzahl von Abtastwerten eines physikalischen Signals aufweist, insbesondere eines elektrischen Signals, durch einen Rechner,

    a) bei dem ein nichtlinearer Markov Prozeß der Ordnung m neuronal modelliert wird, indem neuronale Netze mit den Daten der meßbaren ersten Zeitreihe des physikalischen Signals auf die dem nichtlinearen Markov Prozeß entsprechenden Vorhersagewahrscheinlichkeiten trainiert werden,
    b) bei dem durch das dem nichtlinearen Markov Prozeß entsprechende trainierte neuronale Netz eine beliebige Anzahl Surrogate ($S_i$, i=1,2,..,M), die eine zweite Zeitreihe ($\{z_t\}$, t=1,2,..,N) darstellen, ermittelt werden,
    c) bei dem zur Klassifikation der meßbaren ersten Zeitreihe des physikalischen Signals je ein Maß für statistische Abhängigkeit d(r) für mehrere r (r=1,2, ...) für die erste Zeitreihe und die zweite Zeitreihe berechnet wird, das die statistischen Abhängigkeiten zwischen der Vergangenheit der jeweiligen Zeitreihe und einem Wert, der r Schritte in der Zukunft liegt, für jedes einzelne Surrogat ($S_i$) im Unterschied zur meßbaren ersten Zeitreihe quantifiziert.

2.  Verfahren nach Anspruch 1,
    bei dem anstelle der meßbaren ersten Zeitreihe ($\{x_t\}$, t=1,2,..,N) eine modifizierte Gaußsche Zeitreihe ($\{y_t\}$, t=1,2,.., N) eingesetzt wird, die dadurch gebildet wird, daß N Zufallszahlen nach Gauß ermittelt werden und diese entsprechend dem Rang der meßbaren ersten Zeitreihe sortiert werden.

3.  Verfahren nach Anspruch 1 oder 2,
    bei dem iterativ Tests verschiedener Nullhypothesen möglich sind, indem jeweils eine Iteration mit einem nichtlinearen Markov Prozeß jeweils höherer Ordnung durchgeführt wird, um eine genauere Vorhersagbarkeit der zweiten Zeitreihe zu erhalten.

4.  Verfahren nach Anspruch 1, 2 oder 3,
    bei dem das Maß für die statistische Abhängigkeit d(r) definiert ist durch

$$d(r) = \sum_{j=1}^{\infty} \underset{B}{\sum_{i_1,\dots,i_j=1}^{n,n+r}} \aleph_{i_1\dots i_j}^2,$$

wobei mit

B        eine Einschränkung für den Index nach der Vorschrift

$$B \equiv \left(\exists i_s : i_s = n + r \land \neg \forall i_s : i_s = n + r\right)$$

bezeichnet wird,

i,j,s     positive ganze Zahlen bezeichnet werden,

$\aleph$     die Kumulanten bezeichnet werden,

r     die Anzahl der Schritte in die Zukunft bezeichnet wird,

n     die Anzahl der verwendeten Werte aus der Vergangenheit bezeichnet wird.

**Claims**

1. Method for classifying the statistical dependence of a measurable first time series which has a prescribable number of samples of a physical signal, in particular an electric signal, by means of a computer,

   a) in which a nonlinear Markov process of order m is neurally modelled by training neural networks with the data of the measurable first time series of the physical signal to the forecast probabilities corresponding to the nonlinear Markov process,
   b) in which an arbitrary number of surrogates ($S_i$, i=1,2,..,M), which constitute a second time series ($\{z_t\}$, t=1,2,.., N) are determined by means of the trained neural network corresponding to the nonlinear Markov process, and
   c) in which for the purpose of classifying the measurable first time series of the physical signal, a measure of statistical dependence d(r) is calculated in each case for a plurality r (r=1,2,...) for the first time series and the second time series, which measure quantifies the statistical dependences between the past of the respective time series and a value, which lies r steps in the future, for each individual surrogate ($S_i$) by contrast with the measurable first time series.

2. Method according to Claim 1, in which instead of the measurable first time series ($\{x_t\}$, t=1,2,..,N) use is made of a modified Gaussian time series ($\{y_t\}$, t=1,2,..,N) which is formed by virtue of the fact that N random numbers are determined in a Gaussian fashion and these are sorted in accordance with the rank of the measurable first time series.

3. Method according to Claim 1 or 2, in which tests of different null hypotheses are. possible, iteratively, by respectively carrying out an iteration using a nonlinear Markov process, of higher order in each case, in order to obtain a more accurate predictability of the second time series.

4. Method according to Claim 1, 2 or 3, in which the measure of the statistical dependency d(r) is defined by

$$d(r) = \sum_{j=1}^{\infty} \sum_{\substack{i_1,\ldots,i_j=1 \\ B}}^{n,n+r} \aleph^2_{i_1\ldots i_j},$$

where

B     denotes a limitation for the index in accordance with the rule

$$B \equiv (\exists i_s : i_s = n + r \land \neg \forall i_s : i_s = n + r)$$

i,j,s     denote positive whole numbers,

$\aleph$     denotes the cumulants,

r     denotes the number of steps into the future, and

n     denotes the number of the values from the past used.

**Revendications**

1.  Procédé de classification de la dépendance statistique d'une première série chronologique mesurable qui comporte un nombre pouvant être prescrit de valeurs d'échantillonnage d'un signal physique, notamment: d'un signal électrique, par un ordinateur,

    a) dans lequel on modélise sous forme neuronale un processus de Markov non linéaire d'ordre m en soumettant des réseaux neuronaux ayant les données de la première série chronologique pouvant être mesurée du signal physique à un apprentissage sur les probabilités de prédiction correspondant au processus de Markov non linéaire
    b) dans lequel on détermine par le réseau neuronal ayant subi un apprentissage correspondant au processus de Markov non linéaire, un nombre quelconque de surrogats ($S_j$, i = 1, 2, ..., M), qui représentent une deuxième série chronologique ($\{z_t\}$, t = 1, 2, ..., N),
    c) dans lequel on calcule pour la classification de la première série chronologique pouvant être mesurée du signal physique, respectivement une mesure pour la dépendance d(r) statistique pour plusieurs r (r = 1, 2, ...) pour la première série chronologique et pour la deuxième série chronologique, qui quantifie, pour chaque surrogat ($S_j$) à la différence de la première série chronologique pouvant être mesurée, les dépendances statistiques entre le passé de chaque série chronologique et une valeur qui se trouve à r stades dans le futur.

2.  Procédé suivant la revendication 1, dans lequel on utilise au lieu de la première série chronologique ($\{x_t\}$, t = 1, 2, ..., N) pouvant être mesurée une série chronologique ($\{y_t\}$, t = 1, 2, ..., N) gaussienne modifiée qui est formée en déterminant suivant Gauss N nombres aléatoires et en les triant en fonction du rang de la première série chronologique pouvant être mesurée.

3.  Procédé suivant la revendication 1 ou 2, dans lequel des tests par itération de diverses hypothèses nulles sont possibles en effectuant respectivement une itération avec un processus de Markov non linéaire d'ordre plus élevé pour obtenir une possibilité de prédiction plus précise de la deuxième série chronologique.

4.  Procédé suivant la revendication 1, 2 ou 3, dans lequel la mesure pour la dépendance d(r) statistique est définie par

$$d(r) = \sum_{j=1}^{\infty} \underset{\underset{B}{i_1,...,i_j=1}}{\sum^{n,n+r}} \aleph^2_{i_1...i_j},$$

dans laquelle

B est une limitation de l'indice suivant la prescription

$$B \equiv (\exists i_s : i_s = n + r \wedge \neg \forall i_s = n + r)$$

i, ,j, s désignent des nombres entiers positifs
$\aleph$ désigne les cumulants
r désigne le nombre des stades dans le futur
n désigne le nombre des valeurs du passé qui ont été utilisées.

## Figur 1

Figur 2

```
┌─────────────────────────┐
│  Messen einer Zeitreihe  │      2a
│  mit einer vorgebbaren   │
│  Anzahl von Abtastwerten │
└─────────────────────────┘
             │
             ▼
┌─────────────────────────┐
│  Neuronale Modellierung  │      2b
│  eines Markov-Prozesses  │
│   der Ordnung m, durch   │
│         den die          │
│   Wahrscheinlichkeits-   │
│     dichteverteilung     │
│    dargestellt wird.     │
└─────────────────────────┘
             │
             ▼
┌─────────────────────────┐
│   Bestimmung einer       │      2c
│  vorgebbaren Anzahl von  │
│   Surrogaten mit dem     │
│     neuronalen Netz      │
└─────────────────────────┘
             │
             ▼
┌─────────────────────────┐
│   Bestimmung eines       │      2d
│     Maßes d(r) für       │
│    unterschiedliche      │
│   Zeitschritte r in die  │
│    Zukunft, das den      │
│   Unterschied zwischen   │
│  Surrogat und gegebenem  │
│   Signal darstellt. -    │
│ Klassifikation für mehrere│
│       Schritte r.        │
└─────────────────────────┘
```

## Figur 3

```
┌─────────────┐
│             │
│     MG      │
│             │
└──────┬──────┘
       │
       ▼
┌─────────────┐
│             │
│      R      │
│             │
└──────┬──────┘
       │
       ▼
┌─────────────┐
│             │
│     WV      │
│             │
└─────────────┘
```